# EUROPÄISCHE PATENTSCHRIFT

(11) **EP 0 686 770 B1**
(45) Veröffentlichungstag und Bekanntmachung des Hinweises auf die Patenterteilung: **20.01.1999**
(21) Anmeldenummer: 95890090.4
(22) Anmeldetag: 09.05.1995
(51) Int. Cl.: F04B 49/24

(54) **Abhebegreifer**
Valve unloader finger
Palpeur de levage

(30) Priorität: 11.05.1994 AT 988/94
(43) Veröffentlichungstag der Anmeldung: 13.12.1995
(73) Patentinhaber: HOERBIGER VENTILWERKE GmbH, 1110 Wien (AT)
(72) Erfinder: Steinrück, Peter, Dipl.-Ing. Dr., A-1140 Wien (AT); Rochowansky, Peter, A-1100 Wien (AT); Rein, Karl, A-1060 Wien (AT)
(74) Vertreter: Pinter, Rudolf, Dipl.-Ing.

(56) Entgegenhaltungen:
- DE-B- 1 079 270
- DE-B- 1 220 078
- DE-C- 849 739
- US-A- 2 118 843

## Beschreibung

Die Erfindung betrifft einen Abhebegreifer für Verdichterventile, mit einem Träger, sowie einer Anzahl darauf befestigter Greiferfinger, wie beispielsweise aus DE-B-1 220 078 bekannt.

Derartige Abhebegreifer sind in einer Vielzahl von Ausführungen bekannt und werden zur Mengenregelung bei an sich selbsttätig und ungesteuert wirkenden Plattenventilen für Kompressoren und dergleichen verwendet. Der mit den Greiferfingern in die Durchströmöffnungen der Ventilsitzplatte des Einlaßventils eintauchende Abhebegreifer ist mit einer zumeist über eine Feder aufgebrachten, verstellbaren Vorspannkraft in Richtung Offenhalten der Ventilplatte belastet, sodaß diese und damit das Einlaßventil über einen gewissen Teil des Verdichtungshubes des Kolbens geöffnet bleibt, womit ein Teil des Zylinderinhaltes nicht verdichtet sondern in die Ansaugleitung rückgeschoben wird.

Bekannt sind in diesem Zusammenhang insbesonders Ausführungen, bei denen die Greiferfinger mit dem Träger einstückig oder aber bei der Herstellung verschweißt sind. Insbesonders für Trockenlauf-Anwendungen, bei denen aus verschiedenen Gründen nicht geschmiert werden kann, sind in letzter Zeit auch Ausführungen der eingangs genannten Art bekannt geworden, bei denen aus dem Vollen gearbeitete Kunststoff-Greiferfinger an einem aus Festigkeitsgründen aus Stahl oder Gußeisen bestehenden Träger angeschraubt sind. Alle genannten Ausführungen sind relativ kompliziert und damit teuer in der Herstellung, wobei bei der letztgenannten Ausführung noch der zusätzliche Nachteil zu erwähnen ist, daß die Schraubbefestigung im Betrieb relativ anfällig gegen Setzungen bzw. Lockerungen ist, sodaß zusätzliche Maßnahmen zur Sicherung getroffen werden müssen.

Aufgabe der vorliegenden Erfindung ist es, einen Abhebegreifer der eingangs genannten Art so zu verbessern, daß die angesprochenen Nachteile der bekannten Ausführungen vermieden werden und daß insbesonders auf konstruktiv einfache und kostengünstige Weise eine sichere Befestigung der Greiferfinger erreicht werden kann.

Dies wird gemäß der vorliegenden Erfindung bei einem Abhebegreifer der genannten Art dadurch erreicht, daß die Greiferfinger an ihrer dem Träger zugewandten Seite mit einem formschlüssig mit dem Träger zusammenwirkenden Halteelement ausgestattet sind, welches zumindest je ein die relative Lage zum Träger festlegendes Positionierelement sowie ein in der Montagestellung am Träger einschnappendes Fixierelement aufweist. Es ist damit also eine Art Schnapp-Verbindung zwischen Greiferfingern und Träger geschaffen, wobei die Sicherung der relativen Lage der beiden Elemente zueinander weitgehend unabhängig von der Befestigung optimiert werden kann. Damit gestaltet sich insbesonders die Montage des Abhebegreifers sehr einfach. Weiters wirkt das am Träger direkt oder indirekt über ein Schließelement oder dgl. einschnappende Fixierelement auch zuverlässig einem Setzen bzw. Lockern der gegenseitigen Verbindung entgegen.

In weiterer Ausgestaltung der Erfindung ist bei einem Abhebegreifer, bei dem Trägerarme sternförmig um eine mittige Nabe angeordnet.sind und durchgehende Bohrungen für die Befestigung der Greiferfinger aufweisen - wie er beispielsweise bei den eingangs beschriebenen geschraubten Verbindungen vorliegt - vorgesehen, daß die Halteelemente zumindest teilweise unmittelbar in die durchgehenden Bohrungen der Trägerarme eingreifen. Damit ist der Träger sehr einfach und ohne komplizierte Vorkehrungen herzustellen.

Zumindest ein Fixierelement an jedem Halteelement kann in weiterer Ausbildung der Erfindung als quer zur Längserstreckung des Greiferfingers elastisch beweglicher Sperrhaken ausgebildet sein, der im fixierten Zustand des Greiferfingers vorzugsweise am gegenüberliegenden Rand der Bohrung des Trägerarmes eingeschnappt ist. Dies ermöglicht eine einfache Ausbildung des Fixierelements, welches mit einer einfachen durchgehenden Bohrung am Träger zusammenwirken kann. Andererseits kann der bewegliche Sperrhaken im fixierten Zustand des Greiferfingers aber auch an einem am gegenüberliegenden Rand der Bohrung des Trägerarmes angeordneten elastischen Ringelement, wie vorzugsweise etwa einem Runddraht-Sprengring, eingeschnappt sein, was die leichte Anpassung auch an unterschiedliche Anforderungen und insbesonders eine Verkleinerung der Dimensionen der Halteelemente erlaubt.

Zumindest zwei gegenüberliegende Positionierelemente an jedem Halteelement stützen sich in weiterer bevorzugter Ausgestaltung der Erfindung von innen her einfach an der durchgehenden Bohrung des Trägerarmes ab, womit bei konstruktiv unkomplizierter Ausbildung die relative Lage der beiden Teile zueinander gut festgelegt wird.

Nach einer anderen Weiterbildung der Erfindung ist vorgesehen, daß sich zumindest zwei gegenüberliegende Positionierelemente an jedem Halteelement von außen her an den Seitenflächen des jeweiligen Trägerarmes abstützen. Auch diese Ausbildung ermöglicht mit einfachen konstruktiven Mitteln eine Festlegung der relativen Position der beiden Teile zueinander, wobei natürlich auch bedarfsweise eine Kombination mit der obenstehend beschriebenen Relativpositionierung vorgesehen werden kann.

In besonders bevorzugter weiterer Ausgestaltung der Erfindung besteht der Träger aus metallischem Werkstoff, vorzugsweise Stahl, und jeder der Greiferfinger aus Kunststoff, vorzugsweise glasfaserverstärkt. Die glasfaserverstärkten Greiferfinger aus Kunststoff sind in der Massenproduktion sehr einfach und billig herzustellen, wobei dieser Werkstoff nicht nur ausreichende Festigkeit für den harten Einsatz sondern durch spezielle Formgebung auch die erforderliche Elastizität für die Schnappverbindung aufweist.

Jeder Greiferfinger kann in weiterer Ausbildung der Erfindung aus langglasfaserverstärktem Polyamid bestehen und hinsichtlich seiner jeweiligen Querschnittsform so ausgelegt sein, daß die Verstärkungsfasern beim Spritzen bevorzugt in Richtung der jeweiligen kritischen Belastung (Fingerkraft) liegen, wodurch eine erhöhte Sicherheit gegen Verformung quer zur Fingerachse erreicht wird. Außerdem kann der jeweilige Querschnitt durch Rippung oder dergleichen so ausgebildet sein, daß seine Steifigkeit wesentlich erhöht ist, wobei die optimale Ausrichtung der Glasfasern beim Spritzen gewährleistet ist.

In weiterer Ausgestaltung der Erfindung kann am Halteelement jedes Greiferfingers eine Positioniermarkierung vorgesehen sein, mit der leicht sichergestellt werden kann, daß die zumeist in zumindest ungefährer Anpassung an die auf Kreisbögen liegenden langlochartigen Durchströmöffnungen der Ventilplatte entsprechend gewölbt ausgebildeten Greiferfinger richtig eingebaut sind, um das Funktionieren des Abhebegreifers nicht zu behindern.

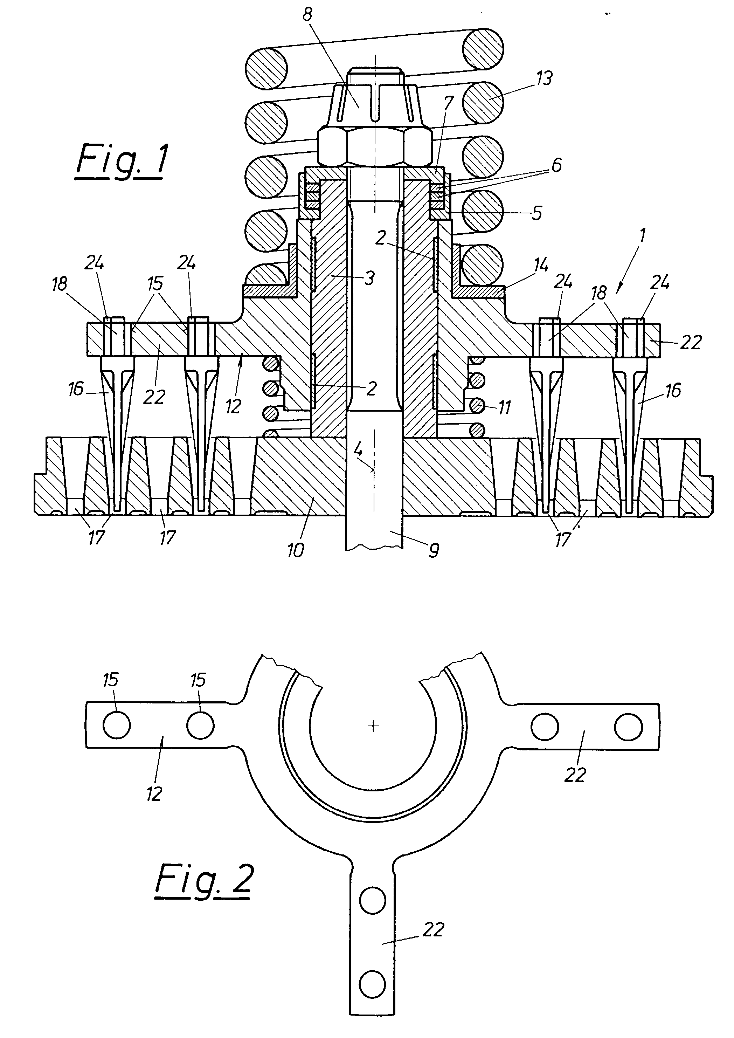

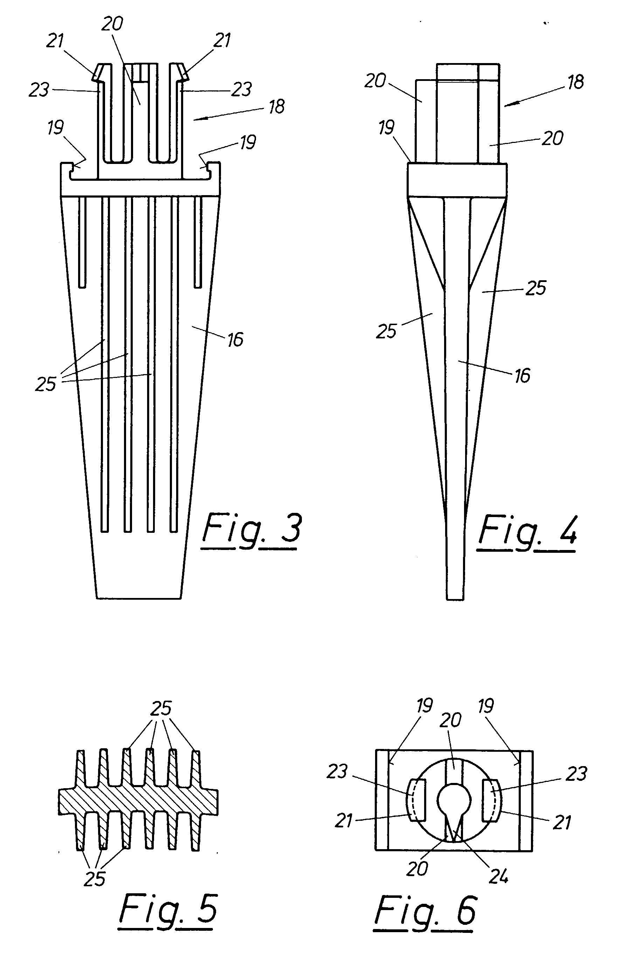

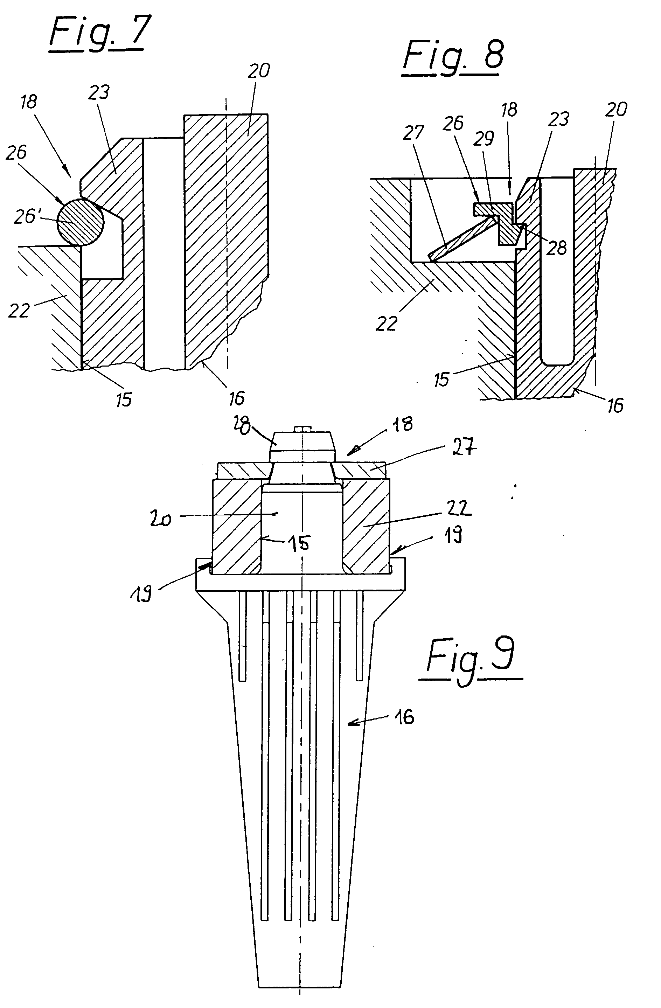

Die Erfindung wird im folgenden noch anhand des in der Zeichnung teilweise schematisch dargestellten Ausführungsbeispiels näher erläutert. Fig. 1 zeigt dabei einen Schnitt durch einen erfindungsgemäß ausgebildeten Abhebegreifer samt seine näheren Umgebung im eingebauten Zustand, Fig. 2 zeigt eine gegenüber Fig. 1 etwas vergrößerte Ansicht auf den Träger des Abhebegreifers von oben, die Fig. 3 bis 6 zeigen verschiedene Ansichten bzw. Schnitte eines vergrößert dargestellten Greiferfingers, Fig. 7 und 8 zeigen andere Ausführungsformen nach der Erfindung anhand des Details der mit dem Träger zusammenwirkenden Halteelemente im vergrößerten Maßstab und Fig. 9 zeigt ein anderes Ausführungsbeispiel eines Greiferfingers eines erfindungsgemäßen Abhebegreifers im Schnitt durch seine Einbaulage.

Der Abhebegreifer 1 nach Fig. 1 ist auf einer mit Gleitringen 2 ausgerüsteten Führungshülse 3 entlang der Ventilachse 4 beweglich. Der in der Darstellung obere Anschlag ist von einem Anschlagring 5 gebildet, der sich über Dämpfungselemente 6 an einer Scheibe 7 abstützt. Die Scheibe 7 ihrerseits ist mittels einer Sicherungsmutter 8 und Dehnschraube 9 mit dem gesamten Saugventil zusammengespannt, von dem aber hier weiters nur die Sitzplatte 10 ersichtlich ist. Der in der Darstellung untere Anschlag des Abhebegreifers 1 wird von der Oberseite der Sitzplatte 10 selbst gebildet.

Gegen den oberen Anschlag hin, in dem der Abhebegreifer 1 außer Funktion ist, wirkt eine Feder 11, die zwischen der Oberseite der Sitzplatte 10 und der Unterseite des Trägers 12 des Abhebegreifers 1 eingesetzt ist. Von oben her ist eine Druckfeder 13 über ein Ringstück 14 am Träger 12 des Abhebegreifers 1 abgestützt, über welche eine einstellbare Vorspannkraft zur Abhebe-Regelung des Saugventils aufgebracht werden kann.

An dem gemäß Fig. 2 sternförmig ausgebildeten Träger 12 sind in durchgehenden Bohrungen 15 Greiferfinger 16 befestigt, die in einen Teil der Durchströmöffnungen 17 der Sitzplatte 10 eintauchen und bei entsprechender Kraftbeaufschlagung des Abhebegreifers 1 über die Druckfeder 13 an der hier nicht dargestellten Ventilplatte angreifen. Damit kann das Schließen des Saugventils gesteuert verzögert und damit die Fördermenge der Verdichters geregelt werden.

Die Greiferfinger 16 sind an ihrer dem Träger 12 zugewandten Seite mit einem formschlüssig mit dem Träger 12 zusammenwirkenden Halteelement 18 ausgestattet, welches einige die relative Lage zum Träger 12 festlegende Positionierelemente 19, 20 sowie zwei in der Montagestellung am Träger 12 einschnappende Fixierelemente 21 aufweist - siehe Fig. 3 bis 6. Die Halteelemente 18 greifen - wie aus Fig. 1 ersichtlich - unmittelbar in die durchgehenden Bohrungen 15 der Trägerarme 22 ein. Die Fixierelemente 21 an jedem Halteelement 18 sind hier als quer zur Längserstreckung des Greiferfingers 16 elastisch beweglich Sperrhaken 23 ausgebildet, welche im fixierten Zustand des Greiferfingers 16 am diesem gegenüberliegenden Rand der Bohrung 15 des Trägerarmes 22 eingeschnappt sind.

Die beiden gegenüberliegenden Positionierelemente 20 (siehe Fig. 6) an jedem Halteelement 18 sind von innen her an der durchgehenden Bohrung 15 des Trägerarmes 22 abgestützt. Die ebenfalls gegenüberliegenden weiteren Positionierelemente 19 (siehe wiederum Fig. 6) an jedem Halteelement 18 sind von außen her an den Seitenflächen des jeweiligen Trägerarmes 22 abgestützt. Damit ergibt sich bei eingeschnapptem Greiferfinger eine eindeutige Lagefestlegung relativ zum Trägerarm 22 - über die Positionsmarkierung (siehe Fig. 6 und Fig. 1) kann dabei leicht sichergestellt werden, daß die Greiferfinger bezüglich der in Fig. 5 ersichtlichen Krümmung passend zur nicht weiter dargestellten Krümmung der langlochartigen Durchströmöffnungen 17 der Sitzplatte 10 montiert sind.

Der Träger 12 besteht aus metallischem Werkstoff - beispielsweise gefrästem oder gelasertem Stahl. Jeder der Greiferfinger 16 besteht aus langglasfaserverstärktem Polyamid und ist hinsichtlich seiner jeweiligen Querschnittsform - wie aus den Fig. 3, 4 und 5 ersichtlich ist - so ausgelegt, daß die Verstärkungsfasern beim Spritzen bevorzugt quer zur Richtung der jeweiligen kritischen Belastung zu liegen kommen. Diese wirkt - wie aus Fig. 1 ersichtlich ist - hier naturgemäß auf eine Ausknickung der Greiferfinger 16 hin, sodaß hier die Verstärkungsfasern natürlich bevorzugt in Längserstreckung der Greiferfinger 16 liegen müssen. Dies wird insbesonders über die Rippen 25 sichergestellt, die den für die Belastbarkeit der Greiferfinger 16 erforderlichen Querschnitt bereitstellen ohne den Verstärkungsglasfasern beim Spritzen eine wahl lose und damit festigkeitsmäßig weniger günstige Anordnung zu ermöglichen.

Gemäß Fig. 7 ist der bzw. jeder bewegliche Sperrhaken 23 im fixierten Zustand des Greiferfingers 16 an einem am gegenüberliegenden Rand der Bohrung 15 des Trägerarmes 22 angeordneten Runddraht-Sprengring 26' eingeschnappt, was hier unmittelbar den Vorteil ergibt, daß der maximale Außendurchmesser des Halteelements 18 nicht über den Durchmesser der Bohrung 15 hinauszugehen braucht und insgesamt kleiner als beispielsweise bei den bisher besprochenen Ausführungen gehalten werden kann, da der elastisch aufzuweitende Sprengring 26' eine besondere bzw. zusätzliche elastische Verformbarkeit des Sperrhakens 23 zur Mitte hin überflüssig macht.

Bei der Ausführung nach Fig. 8 ist das zum Einschnappen des bzw. der Sperrhaken 23 vorgesehene elastische Ringelement 26 abweichend von Fig. 7 zweiteilig ausgeführt - eine Tellerfeder 27 ist hier in einer Vertiefung des Trägerarms 22 angeordnet und drückt einen mit Einschnappnoppen 28 versehenen Stützring 29 in der Darstellung nach oben, womit der Greiferfinger 16 zuverlässig in der Bohrung 15 des Trägerarmes 22 fixiert ist.

Bei der Ausführung nach Fig. 9 ist der Greiferfinger 16 wiederum von unten her in den Trägerarm 22 bzw. dessen Bohrung 15 eingesetzt und über Positionierelemente 19, 20 in seiner relativen Lage zum Träger festgelegt. Als Halteelement 18 fungiert hier eine elastische Scheibe 27 aus Kunststoff oder dergleichen, die auf einen eingeschnürten Zapfenteil 28 am Ende des Greiferfingers 16 aufschnappt. Der Zapfenteil 28 kann dabei ohne weiteres einstückig bei der Herstellung des Greiferfingers 16 beispielsweise aus Kunststoff mitgespritzt sein. Die Scheibe 27 hat hier zusätzlich die Aufgabe, den Spielausgleich, der durch die verschiedenen Längenausdehnungen zwischen Greiferfinger 16 einerseits und Trägerarm 22 andererseits bei Temperaturänderungen entsteht, zu übernehmen. Es kann dabei für die.Scheibe 27 beispielsweise auch Kunststoff eingesetzt werden, der einen wesentlich größeren Ausdehnungskoeffizienten besitzt als der Greiferfinger 16 selbst. Die Dicke der Scheibe 27 wird so gewählt, daß über den ganzen Temperaturbereich eine spielfreie Befestigung gewährleistet ist, wobei zusätzlich über eine hier nicht dargestellte tellerförmige Form der unbelasteten Scheibe 27 eine Vorspannung erzielt werden kann, die auch Fertigungstoleranzen und dergleichen ausgleicht.

Abgesehen von den dargestellten und besprochenen Ausführungen könnte insbesonders das Fixierelement beispielsweise auch in Form von einzelnen Noppen oder Ringsegmenten ausgeführt sein, die am oberen Rand eines in sich verformbaren Hohlzylinders sitzen und damit beim Durchstecken durch eine entsprechende Bohrung am Träger vorerst zusammengedrückt werden und dann einschnappend am Rand der Bohrung sicher halten. Weiters sind auch verschiedene Tellerfeder-Konstruktionen denkbar, die ebenfalls aus Kunststoff bestehen können.

Mit der dargestellten und besprochenen Ausführung gemäß der Erfindung ergibt sich eine Kostensenkung bei der Herstellung der Greiferfinger 16 sowie bei der Montierung des gesamten Abhebegreifers 1, wobei die Verbindung zwischen dem Greiferfinger 16 und dem Träger 12 einfach und ohne Setzung ist. Die Schnapp-Konstruktion erlaubt eine einfache und sichere Befestigung, wobei die sperrhakenartigen Fixierelemente 21 den Spielausgleich bei verschiedenen Temperaturausdehnungen und Herstellungstoleranzen übernehmen.

## Patentansprüche

1. Abhebegreifer (1) für Verdichterventile, mit einem Träger (12), sowie einer Anzahl darauf befestigter Greiferfinger (16), **dadurch gekennzeichnet**, daß die Greiferfinger (16) an ihrer dem Träger (12) zugewandte Seite mit einem formschlüssig mit dem Träger (12) zusammenwirkenden Halteelement (18) ausgestattet sind, welches zumindest je ein die relative Lage zum Träger (12) festlegendes Positionierelement (19, 20) sowie ein in der Montagestellung am Träger (12) einschnappendes Fixierelement (21) aufweist.

2. Abhebegreifer nach Anspruch 1, wobei Trägerarme sternförmig um eine mittige Nabe angeordnet sind und durchgehende Bohrungen für die Befestigung der Greiferfinger aufweisen, dadurch gekennzeichnet, daß die Halteelemente (18) zumindest teilweise unmittelbar in die durchgehenden Bohrungen (15) der Trägerarme (22) eingreifen.

3. Abhebegreifer nach Anspruch 2, dadurch gekennzeichnet, daß zumindest ein Fixierelement (21) an jedem Halteelement (18) als quer zur Längserstreckung des Greiferfingers (16) elastisch beweglicher Sperrhaken (23) ausgebildet ist, der im fixierten Zustand des Greiferfingers (16) vorzugsweise am gegenüberliegenden Rand der Bohrung (15) des Trägerarms (22) eingeschnappt ist.

4. Abhebegreifer nach Anspruch 2, dadurch gekennzeichnet, daß der bewegliche Sperrhaken (23) im fixierten Zustand des Greiferfingers (16) an einem am gegenüberliegenden Rand der Bohrung (15) des Trägerarmes (22) angeordneten elastischen Ringelement (26) vorzugsweise einem Runddraht-Sprengring (26), eingeschnappt ist.

5. Abhebegreifer nach einem der Ansprüche 2 bis 4, dadurch gekennzeichnet, daß sich zumindest zwei gegenüberliegende Positionierelemente (19) an jedem Halteelement (18) von innen her an der durchgehenden Bohrung (15) des Trägerarmes (22) abstützen.

6. Abhebegreifer nach einem der Ansprüche 2 bis 5, dadurch gekennzeichnet, daß sich zumindest zwei gegenüberliegende Positionierelemente (20) an jedem Halteelement (18) von außen her an den Seitenflächen des jeweiligen Trägerarmes (22) abstützen.

7. Abhebegreifer nach einem oder mehreren der Ansprüche 1 bis 6, dadurch gekennzeichnet, daß der Träger (12) aus metallischem Werkstoff, vorzugsweise Stahl, und jeder der Greiferfinger (16) aus Kunststoff, vorzugsweise glasfaserverstärkt, besteht.

8. Abhebegreifer nach Anspruch 7, dadurch gekennzeichnet, daß jeder Greiferfinger (16) aus langglasfaserverstärktem Polyamid besteht und hinsichtlich seiner jeweiligen Querschnittsform so ausgelegt ist, daß die Verstärkungsfasern beim Spritzen bevorzugt in Richtung der jeweiligen kritischen Belastung liegen.

9. Abhebegreifer nach einem oder mehreren der Ansprüche 1 bis 8, dadurch gekennzeichnet, daß am Halteelement (18) jedes Greiferfingers (16) eine Positionsmarkierung (24) vorgesehen ist.

## Claims

1. A lift-off gripper (1) for compressor valves, with a support (12) and a plurality of gripper fingers (16) secured thereto, **characterized in that** the gripper fingers (16) are provided on their side facing the support (12) with a retaining element (18) which cooperates with the support (12) in a positively locking manner and which comprises at least one respective positioning element (19, 20) securing the relative position with respect to the support (12) in each case as well as a fixing element (21) snapping onto the support (12) in the assembled position.

2. A lift-off gripper according to Claim 1, in which support arms are arranged in a star shape around a central hub and are provided with through bores for securing the gripper fingers, **characterized in that** the retaining elements (18) directly engage in the through bores (15) of the support arms (22) at least in part.

3. A lift-off gripper according to Claim 2, **characterized in that** at least one fixing element (21) on each retaining element (18) is designed as a locking hook (23) which is resiliently movable transversely to the longitudinal extension of the gripper finger (16) and which in the fixed state of the gripper finger (16) is preferably snapped onto the opposite edge of the bore (15) of the support arm (22).

4. A lift-off gripper according to Claim 2, **characterized in that** in the fixed state of the gripper finger (16) the movable locking hook (23) is snapped onto a resilient annular element (26), preferably a round-wire spring ring (26), arranged on the opposite edge of the bore (15) of the support arm (22).

5. A lift-off gripper according to one of Claims 2 to 4, **characterized in that** at least two opposite positioning elements (19) on each retaining element (18) are supported from the inside against the through bore (15) of the support arm (22).

6. A lift-off gripper according to one of Claims 2 to 5, **characterized in that** at least two opposite positioning elements (20) on each retaining element (18) are supported from the outside against the lateral faces of the respective support arm (22).

7. A lift-off gripper according to one or more of Claims 1 to 6, **characterized in that** the support (12) consists of metallic material, preferably steel, and each of the gripper fingers (16) consists of plastics material, preferably reinforced with glass fibres.

8. A lift-off gripper according to Claim 7, **characterized in that** each gripper finger (16) consists of polyamide with reinforced with long glass fibres and is designed in such a way with respect to its respective cross-sectional shape that during injection the reinforcing fibres are preferably arranged in the direction of the respective critical loading.

9. A lift-off gripper according to one or more of Claims 1 to 8, **characterized in that** a position-marking (24) is provided on the retaining element (18) of each gripper finger (16).

## Revendications

1. Équipage de prise et de levage (1) pour des soupapes de compresseurs, comprenant un support (12), ainsi qu'un certain nombre de doigts de prise (16) fixés sur celui-ci, caractérisé en ce que les doigts de prise (16) sont équipés, sur leur côté tourné vers le support (12), d'un élément de maintien (18) qui coopère par coopération de formes avec le support (12), lesdits éléments de maintien comportant chacun au moins un élément de positionnement (19, 20) qui fixe la position relative par rapport au support (12), ainsi qu'un élément de fixation (21) encliqueté sur le support (12) dans la position de montage.

2. Équipage de prise et de levage selon la revendication 1, dans lequel des bras de support sont agencés en forme d'étoile autour d'un moyeu central et présentent des perçages traversants pour la fixation des doigts de prise, caractérisé en ce que les éléments de maintien (18) s'engagent au moins partiellement directement dans les perçages traversants (15) des bras de support (22).

3. Équipage de prise et de levage selon la revendication 2, caractérisé en ce qu'au moins un élément de fixation (21) est réalisé sur chaque élément de maintien (18) sous la forme d'un crochet de blocage (23) mobile de façon élastique perpendiculairement à l'extension longitudinale du doigt de prise (16), ledit crochet étant, dans l'état fixé du doigt de prise (16), encliqueté de préférence sur la bordure opposée du perçage (15) du bras de support (22).

4. Équipage de prise et de levage selon la revendication 2, caractérisé en ce que le crochet de blocage mobile (23) est encliqueté, dans l'état fixé du doigt de prise (16) sur un élément annulaire élastique (26), de préférence un anneau élastique en fil circulaire (26), agencé à la bordure opposée du perçage (15) du bras de support (22).

5. Équipage de prise et de levage selon l'une des revendications 2 à 4, caractérisé en ce que deux éléments de positionnement opposés (19) au moins s'appuient sur chaque élément de maintien (18) depuis l'intérieur contre le perçage traversant (15) du bras de support (22).

6. Équipage de prise et de levage selon l'une des revendications 2 à 5, caractérisé en ce que deux éléments de positionnement opposés (20) au moins s'appuient sur chaque élément de maintien (18) depuis l'extérieur contre les surfaces latérales du bras de support respectif (22).

7. Équipage de prise et de levage selon l'une ou plusieurs des revendications 1 à 6, caractérisé en ce que le support (12) est en matériau métallique, de préférence de l'acier, et en ce que chacun des doigts de prise (16) est en matière plastique, de préférence renforcée par des fibres le verre.

8. Équipage de prise et de levage selon la revendication 7, caractérisé en ce que chaque doigt de prise (16) est réalisé en polyamide renforcé par des longues fibres de verre, et est conçu, en ce qui concerne la forme de sa section transversale respective, de telle façon que les fibres de renfort soient de préférence disposées dans la direction de la charge critique respective lors de l'injection.

9. Équipage de prise et de levage selon l'une ou plusieurs des revendications 1 à 8, caractérisé en ce qu'il est prévu un marquage de position (24) sur les éléments de maintien (18) de chaque doigt de prise (16).
